# EUROPEAN PATENT APPLICATION

(11) **EP 3 030 006 A1**
(43) Date of publication of application: **08.06.2016**
(21) Application number: 13893191.0
(22) Date of filing: 05.09.2013
(51) Int. Cl.: H04W 52/02

(54) **DATA TRANSMISSION METHOD, BASE STATION AND USER EQUIPMENT**

(71) Applicant: Huawei Technologies Co., Ltd., Longgang District Shenzhen, Guangdong 518129 (CN)
(72) Inventor: DAI, Mingzeng, Shenzhen Guangdong 518129 (CN); ZENG, Qinghai, Shenzhen Guangdong 518129 (CN); ZHANG, Jian, Shenzhen Guangdong 518129 (CN); GUO, Yi, Shenzhen Guangdong 518129 (CN)
(74) Representative: Gill Jennings & Every LLP
(86) International application number: PCT/CN2013/083014
(87) International publication number: WO 2015/032056

(57) **Abstract**

The present invention relates to the communications field, and discloses a data transmission method, a base station, and user equipment, which are used to resolve a problem in the prior art that timeliness of data reception from a WLAN AP by UE is relatively low and a relatively large delay exists. The method provided in the present invention includes: sending, by a base station, a first indication message to user equipment UE, where the first indication message is used to instruct the UE to adjust a wireless local area network WLAN module in the UE to a non-power saving mode; and sending, by the base station, to-be-offloaded data to the WLAN AP, so that the WLAN AP sends the to-be-offloaded data to the UE according to the non-power saving mode of the UE, where the non-buffered data includes the to-be-offloaded data. The present invention is applicable to the communications field, and is used to transmit data.

## Description

### TECHNICAL FIELD

The present invention relates to the communications field, and in particular, to a data transmission method, a base station, and user equipment.

### BACKGROUND

Currently, as smartphones develop, a wireless local area network (WLAN, Wireless Local Access Network) module gradually becomes an essential configuration of user equipment (UE, User Equipment). A user may enable a WLAN module in UE to perform scanning, determine an available WLAN access point (AP, Access Point), choose to access the available WLAN AP, and access the Internet by using a WLAN network of the WLAN AP. In another aspect, to improve a UE throughput, the Third Generation Partnership Project (3GPP, 3rd Generation Partnership Project) introduces a carrier aggregation (CA, Carrier Aggregation) technology for wireless mobile communications networks. The carrier aggregation technology enables UE to simultaneously use multiple component carriers (CC, Component Carrier) to perform uplink and downlink communication, so that the UE can transmit data at a relatively high rate.

As mobile Internet services diversify and functions of UE increase day by day, a data volume on a wireless mobile communications network increases rapidly, which causes a great burden on a Third Generation Partnership Project (3GPP, 3rd Generation Partnership Project) mobile network. In recent years, communications operators start to deploy WLAN networks in some hotspot areas, a base station may send, to a WLAN AP, data that needs to be delivered to UE, and the WLAN AP forwards the data to the UE. That is, the carrier aggregation technology is used so that the UE simultaneously transmits data by simultaneously using a carrier on a 3GPP network and a carrier on a WLAN network, thereby increasing a data transfer rate of UE and reducing load of a 3GPP network.

To reduce power consumption of UE, when a base station forwards data to UE by using a WLAN AP, the UE receives, at intervals, data sent to the UE by the WLAN AP. This solution decreases timeliness of data reception from a WLAN AP by UE and causes a relatively serious delay problem.

### SUMMARY

Embodiments of the present invention provide a data transmission method, a base station, and user equipment, which can resolve a problem in the prior art that timeliness of data reception from a WLAN AP by UE is relatively low and a relatively large delay exists.

To achieve the foregoing objective, the following technical solutions are adopted in the embodiments of the present invention:

According to a first aspect, an embodiment of the present invention provides a data transmission method, where the method includes:
sending, by a base station, a first indication message to user equipment UE, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
sending, by the base station, to-be-offloaded data to the WLAN AP, so that the WLAN AP sends the to-be-offloaded data to the UE according to the non-power saving mode of the UE, where the non-buffered data includes the to-be-offloaded data.

With reference to the first aspect, in a first possible implementation manner, the sending, by a base station, a first indication message to UE specifically includes:
sending, by the base station, a WLAN activation message to the UE, where the WLAN activation message is used to instruct the UE to enable the WLAN module and adjust the WLAN module to the non-power saving mode; and
before the sending, by the base station, to-be-offloaded data to the WLAN AP, the method further includes:
   sending a second indication message to the WLAN AP, where the second indication message is used to indicate that the WLAN module is in the non-power saving mode, so that the WLAN AP sends the to-be-offloaded data to the UE, where
   the second indication message includes an identity of the UE.

With reference to the first aspect, in a second possible implementation manner, the sending, by a base station, a first indication message to user equipment UE specifically includes:
sending, by the base station, a power saving mode cancellation indication message to the UE, where the power saving mode cancellation indication message is used to instruct the UE to adjust the WLAN module to the non-power saving mode; and
before the sending, by the base station, to-be-offloaded data to the WLAN AP, the method further includes:
   sending a second indication message to the WLAN AP, where the second indication message is used to indicate that the WLAN module is in the non-power saving mode, so that the WLAN AP sends the to-be-offloaded data to the UE, where
   the second indication message includes an identity of the UE.

With reference to the first aspect, or the first possible implementation manner of the first aspect, or the second possible implementation manner of the first aspect, in a third possible implementation manner, before the sending, by a base station, a first indication message to user equipment UE, the method further includes:
determining information about the to-be-offloaded data, where the information about the to-be-offloaded data includes at least one of the following:
   a data volume of the to-be-offloaded data and a delay requirement of the to-be-offloaded data; and
   the sending, by a base station, a first indication message to user equipment UE specifically includes:
      when determining that the data volume of the to-be-offloaded data is greater than or equal to a first threshold and/or determining that the delay requirement of the to-be-offloaded data is less than or equal to a second threshold, sending the first indication message to the UE.

With reference to the first aspect, in a fourth possible implementation manner, before the sending, by a base station, a first indication message to user equipment UE, the method further includes:
receiving, by the base station, a WLAN power saving mode indication message sent by the UE, where the WLAN power saving mode indication message is used to indicate that the WLAN module is in a power saving mode, and the WLAN power saving mode indication message includes an association identifier AID allocated to the UE by the WLAN AP.

With reference to the fourth possible implementation manner of the first aspect, in a fifth possible implementation manner, after the receiving, by the base station, a WLAN power saving mode indication message sent by the UE, the method further includes:
receiving, by the base station, a beacon Beacon frame sent by the WLAN AP; and
adding, by the base station, the AID to the Beacon frame, and sending the Beacon frame to the UE, so that the UE listens for the Beacon frame and determines, according to the AID acquired by means of listening, to receive the to-be-offloaded data.

With reference to the fifth possible implementation manner of the first aspect, in a sixth possible implementation manner, the sending, by a base station, a first indication message to user equipment UE specifically includes:
sending a WLAN activation message to the UE, where the WLAN activation message is used to instruct the UE to enable the WLAN module and adjust the WLAN module to the non-power saving mode, and the WLAN activation message includes the Beacon frame that carries the AID, so that the UE instructs, according to the AID, the WLAN AP to send the to-be-offloaded data to the UE.

According to a second aspect, an embodiment of the present invention provides a data transmission method, where the method includes:
receiving, by user equipment UE, a first indication message sent by a base station, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
adjusting, by the UE, the WLAN module to the non-power saving mode according to the first indication message, and receiving, in the non-power saving mode, to-be-offloaded data sent by the WLAN AP, where the non-buffered data includes the to-be-offloaded data.

With reference to the second aspect, in a first possible implementation manner, the receiving, by UE, a first indication message sent by a base station specifically includes:
receiving, by the UE, a WLAN activation message sent by the base station, where the WLAN activation message is used to instruct the UE to enable the WLAN module and adjust the WLAN module to the non-power saving mode.

With reference to the second aspect, in a second possible implementation manner, the receiving, by UE, a first indication message sent by a base station specifically includes:
receiving, by the UE, a power saving mode cancellation indication message sent by the base station, where the power saving mode cancellation indication message is used to instruct the UE to adjust the WLAN module to the non-power saving mode.

With reference to the second aspect, in a third possible implementation manner, before the receiving, by UE, a first indication message sent by a base station, the method further includes:
sending, by the UE, a WLAN power saving mode indication message to the base station, where the WLAN power saving mode indication message is used to indicate that the WLAN module is in a power saving mode, and the WLAN power saving mode indication message includes an association identifier AID allocated to the UE by the WLAN AP.

With reference to the third possible implementation manner of the second aspect, in a fourth possible implementation manner, after the sending, by the UE, a WLAN power saving mode indication message to the base station, the method further includes:
receiving, by the UE, a beacon Beacon frame sent by the base station, where the Beacon frame carries the AID; and
listening, by the UE, for the Beacon frame and acquiring the AID, and determining, according to the AID, to receive the to-be-offloaded data sent by the WLAN AP.

With reference to the fourth possible implementation manner of the second aspect, in a fifth possible implementation manner, the receiving, by UE, a first indication message sent by a base station specifically includes:
receiving, by the UE, a WLAN activation message sent by the base station, where the WLAN activation message is used to instruct the UE to enable the WLAN module and adjust the WLAN module to the non-power saving mode, and the WLAN activation message includes the Beacon frame that carries the AID; and
acquiring, by the UE, the Beacon frame from the WLAN activation message, acquiring the AID from the Beacon frame, and instructing, according to the AID, the WLAN AP to send the to-be-offloaded data to the UE.

According to a third aspect, an embodiment of the present invention provides a base station, where the base station includes:
a sending unit, configured to send a first indication message to user equipment UE, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP, where
the sending unit is further configured to send to-be-offloaded data to the WLAN AP, so that the WLAN AP sends the to-be-offloaded data to the UE according to the non-power saving mode of the UE, where the non-buffered data includes the to-be-offloaded data.

With reference to the third aspect, in a first possible implementation manner, the sending unit is specifically configured to send a WLAN activation message to the UE, where the WLAN activation message is used to instruct the UE to enable the WLAN module and adjust the WLAN module to the non-power saving mode; and
the sending unit is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

With reference to the third aspect, in a second possible implementation manner, the sending unit is specifically configured to send a power saving mode cancellation indication message to the UE, where the power saving mode cancellation indication message is used to instruct the UE to adjust the WLAN module to the non-power saving mode; and
the sending unit is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

With reference to the third aspect, or the first possible implementation manner of the third aspect, or the second possible implementation manner of the third aspect, in a third possible implementation manner, the base station further includes:
a determining unit, configured to determine information about the to-be-offloaded data, where the information about the to-be-offloaded data includes at least one of the following: a data volume of the to-be-offloaded data and a delay requirement of the to-be-offloaded data, where
the sending unit is specifically configured to: when the determining unit determines that the data volume of the to-be-offloaded data is greater than or equal to a first threshold and/or the determining unit determines that the delay requirement of the to-be-offloaded data is less than or equal to a second threshold, send the first indication message to the UE.

With reference to the third aspect, in a fourth possible implementation manner, the base station further includes:
a receiving unit, configured to receive a WLAN power saving mode indication message sent by the UE, where the WLAN power saving mode indication message is used to indicate that the WLAN module is in a power saving mode, and the WLAN power saving mode indication message includes an association identifier AID allocated to the UE by the WLAN AP.

With reference to the fourth possible implementation manner of the third aspect, in a fifth possible implementation manner, the receiving unit is further configured to receive a beacon Beacon frame sent by the WLAN AP; and
the sending unit is further configured to add the AID to the Beacon frame and send the Beacon frame to the UE, so that the UE listens for the Beacon frame and determines, according to the AID acquired by means of listening, to receive the to-be-offloaded data.

With reference to the fifth possible implementation manner of the third aspect, in a sixth possible implementation manner, the sending unit is specifically configured to send a WLAN activation message to the UE, where the WLAN activation message is used to instruct the UE to enable the WLAN module and adjust the WLAN module to the non-power saving mode, and the WLAN activation message includes the Beacon frame that carries the AID, so that the UE instructs, according to the AID, the WLAN AP to send the to-be-offloaded data to the UE.

According to a fourth aspect, an embodiment of the present invention provides user equipment, where the user equipment includes:
a receiving unit, configured to receive a first indication message sent by a base station, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
a processing unit, configured to adjust the WLAN module to the non-power saving mode according to the first indication message received by the receiving unit, where
the receiving unit is further configured to receive, in the non-power saving mode, to-be-offloaded data sent by the WLAN AP, where
the non-buffered data includes the to-be-offloaded data.

With reference to the fourth aspect, in a first possible implementation manner, the receiving unit is specifically configured to receive a WLAN activation message sent by the base station, where the WLAN activation message is used to instruct the UE to enable the WLAN module and adjust the WLAN module to the non-power saving mode.

With reference to the fourth aspect, in a second possible implementation manner, the receiving unit is specifically configured to receive a power saving mode cancellation indication message sent by the base station, where the power saving mode cancellation indication message is used to instruct the UE to adjust the WLAN module to the non-power saving mode.

With reference to the fourth aspect, in a third possible implementation manner, the user equipment further includes:
a sending unit, configured to send a WLAN power saving mode indication message to the base station, where the WLAN power saving mode indication message is used to indicate that the WLAN module is in a power saving mode, and the WLAN power saving mode indication message includes an association identifier AID allocated to the UE by the WLAN AP.

With reference to the third possible implementation manner of the fourth aspect, in a fourth possible implementation manner, the receiving unit is further configured to receive a beacon Beacon frame sent by the base station, where the Beacon frame carries the AID; and
the processing unit is further configured to listen for the Beacon frame received by the receiving unit, and acquire the AID; and determine, according to the AID, to receive the to-be-offloaded data sent by the WLAN AP.

With reference to the fourth possible implementation manner of the fourth aspect, in a fifth possible implementation manner, the receiving unit is specifically configured to receive a WLAN activation message sent by the base station, where the WLAN activation message is used to instruct the UE to enable the WLAN module and adjust the WLAN module to the non-power saving mode, and the WLAN activation message includes the Beacon frame that carries the AID; and
the processing unit is configured to acquire the Beacon frame from the WLAN activation message received by the receiving unit, acquire the AID from the Beacon frame, and instruct, according to the AID, the WLAN AP to send the to-be-offloaded data to the UE.

According to a fifth aspect, an embodiment of the present invention provides a base station, where the base station includes:
a transmitter, configured to send a first indication message to user equipment UE, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP, where
the transmitter is further configured to send to-be-offloaded data to the WLAN AP, so that the WLAN AP sends the to-be-offloaded data to the UE according to the non-power saving mode of the UE, where the non-buffered data includes the to-be-offloaded data.

With reference to the fifth aspect, in a first possible implementation manner, the transmitter is specifically configured to send a WLAN activation message to the UE, where the WLAN activation message is used to instruct the UE to enable the WLAN module and adjust the WLAN module to the non-power saving mode; and
the transmitter is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

With reference to the fifth aspect, in a second possible implementation manner, the transmitter is specifically configured to send a power saving mode cancellation indication message to the UE, where the power saving mode cancellation indication message is used to instruct the UE to adjust the WLAN module to the non-power saving mode; and
the transmitter is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

With reference to the fifth aspect, or the first possible implementation manner of the fifth aspect, or the second possible implementation manner of the fifth aspect, in a third possible implementation manner, the base station further includes:
a processor, configured to determine information about the to-be-offloaded data, where the information about the to-be-offloaded data includes at least one of the following: a data volume of the to-be-offloaded data and a delay requirement of the to-be-offloaded data, where
the transmitter is specifically configured to: when the processor determines that the data volume of the to-be-offloaded data is greater than or equal to a first threshold and/or the processor determines that the delay requirement of the to-be-offloaded data is less than or equal to a second threshold, send the first indication message to the UE.

With reference to the fifth aspect, in a fourth possible implementation manner, the base station further includes:
a receiver, configured to receive a WLAN power saving mode indication message sent by the UE, where the WLAN power saving mode indication message is used to indicate that the WLAN module is in a power saving mode, and the WLAN power saving mode indication message includes an association identifier AID allocated to the UE by the WLAN AP.

With reference to the fourth possible implementation manner of the fifth aspect, in a fifth possible implementation manner, the receiver is further configured to receive a beacon Beacon frame sent by the WLAN AP; and
the transmitter is further configured to add the AID to the Beacon frame and send the Beacon frame to the UE, so that the UE listens for the Beacon frame and determines, according to the AID acquired by means of listening, to receive the to-be-offloaded data.

With reference to the fifth possible implementation manner of the fifth aspect, in a sixth possible implementation manner, the transmitter is specifically configured to send a WLAN activation message to the UE, where the WLAN activation message is used to instruct the UE to enable the WLAN module and adjust the WLAN module to the non-power saving mode, and the WLAN activation message includes the Beacon frame that carries the AID, so that the UE instructs, according to the AID, the WLAN AP to send the to-be-offloaded data to the UE.

According to a sixth aspect, an embodiment of the present invention provides user equipment, where the user equipment includes:
a receiver, configured to receive a first indication message sent by a base station, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
a processor, configured to adjust the WLAN module to the non-power saving mode according to the first indication message received by the receiver, where
the receiver is further configured to receive, in the non-power saving mode, to-be-offloaded data sent by the WLAN AP, where
the non-buffered data includes the to-be-offloaded data.

With reference to the sixth aspect, in a first possible implementation manner, the receiver is specifically configured to receive a WLAN activation message sent by the base station, where the WLAN activation message is used to instruct the UE to enable the WLAN module and adjust the WLAN module to the non-power saving mode.

With reference to the sixth aspect, in a second possible implementation manner, the receiver is specifically configured to receive a power saving mode cancellation indication message sent by the base station, where the power saving mode cancellation indication message is used to instruct the UE to adjust the WLAN module to the non-power saving mode.

With reference to the sixth aspect, in a third possible implementation manner, the user equipment further includes:
a transmitter, configured to send a WLAN power saving mode indication message to the base station, where the WLAN power saving mode indication message is used to indicate that the WLAN module is in a power saving mode, and the WLAN power saving mode indication message includes an association identifier AID allocated to the UE by the WLAN AP.

With reference to the third possible implementation manner of the sixth aspect, in a fourth possible implementation manner, the receiver is further configured to receive a beacon Beacon frame sent by the base station, where the Beacon frame carries the AID; and
the processor is further configured to listen for the Beacon frame received by the receiver, and acquire the AID; and determine, according to the AID, to receive the to-be-offloaded data sent by the WLAN AP.

With reference to the fourth possible implementation manner of the sixth aspect, in a fifth possible implementation manner, the receiver is specifically configured to receive a WLAN activation message sent by the base station, where the WLAN activation message is used to instruct the UE to enable the WLAN module and adjust the WLAN module to the non-power saving mode, and the WLAN activation message includes the Beacon frame that carries the AID; and
the processor is configured to acquire the Beacon frame from the WLAN activation message received by the receiver, acquire the AID from the Beacon frame, and instruct, according to the AID, the WLAN AP to send the to-be-offloaded data to the UE.

In the data transmission method, the base station, and the user equipment provided in the embodiments of the present invention, a base station sends a first indication message to UE, to instruct the UE to adjust a WLAN module to a non-power saving mode, and the base station sends to-be-offloaded data to a WLAN AP. Because the WLAN module in the UE is in the non-power saving mode, the WLAN AP does not need to buffer the to-be-offloaded data, and may send the to-be-offloaded data to the UE in real time. Compared with the prior art, in the method, the base station, and the user equipment provided in the embodiments, when the base station performs data offloading by using the WLAN AP, the WLAN module in the UE may be set to the non-power saving mode, so that the WLAN AP does not need to buffer the to-be-offloaded data. In this way, the to-be-offloaded data can be sent to the UE in real time, and a transmission delay of the to-be-offloaded data can be reduced. Meanwhile, because the WLAN module in the UE is in the non-power saving mode, the to-be-offloaded data can be acquired from the WLAN AP in real time, which ensures a transmission success rate of the to-be-offloaded data.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a system according to an embodiment of the present invention;
FIG. 2 is a schematic flowchart of a data transmission method according to Embodiment 1 of the present invention;
FIG. 3 is a schematic flowchart of a data transmission method according to Embodiment 2 of the present invention;
FIG. 4 is a schematic flowchart of a data transmission method according to Embodiment 3 of the present invention;
FIG. 5 is a schematic flowchart of a data transmission method according to Embodiment 4 of the present invention;
FIG. 6 is a schematic flowchart of a data transmission method according to Embodiment 5 of the present invention;
FIG. 7 is a schematic flowchart of a data transmission method according to Embodiment 6 of the present invention;
FIG. 8 is a schematic flowchart of a data transmission method according to Embodiment 7 of the present invention;
FIG. 9 is a schematic flowchart of a data transmission method according to Embodiment 8 of the present invention;
FIG. 10 and FIG. 11 are block diagrams of a structure of a base station according to Embodiment 9 of the present invention;
FIG. 12 and FIG. 13 are block diagrams of a structure of user equipment according to Embodiment 10 of the present invention;
FIG. 14 and FIG. 15 are block diagrams of a structure of a base station according to Embodiment 11 of the present invention;
FIG. 16 and FIG. 17 are block diagrams of a structure of user equipment according to Embodiment 12 of the present invention; and
FIG. 18 is a schematic diagram of a structure of a WLAN protocol stack according to Embodiment 2 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments acquired by a person of ordinary skill in the art based on the embodiments of the present invention without creative efforts shall fall within the protection scope of the present invention.

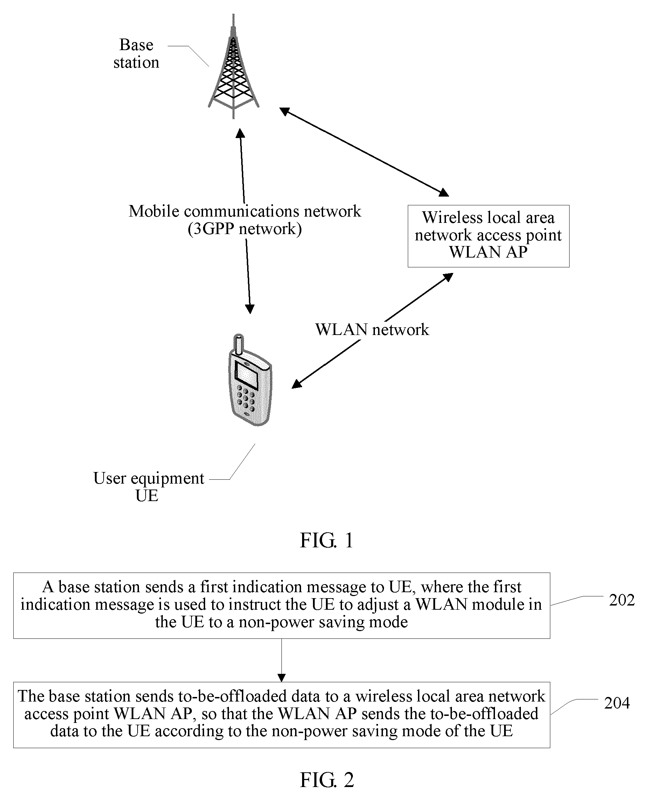

To facilitate understanding, an embodiment provides an architectural diagram of a system for reference. As shown in FIG. 1, a 3GPP mobile communications network is established between a base station and UE, and meanwhile, an operator also deploys a WLAN network. The WLAN generally includes a wireless local area network access point (WLAN AP for short) and a station (station, STA for short). The WLAN AP is responsible for providing network access for the STA, and meanwhile, the WLAN AP is also a point that connects the WLAN and the 3GPP mobile communications network. Generally, the WLAN AP is directly connected to the base station, and the base station may send service data to the UE by using the WLAN AP, thereby implementing, by means of offloading, transmission of data that needs to be delivered by the base station.

In this specification, various aspects are described with reference to user equipment and/or a base station.

User equipment refers to a device that provides voice and/or data connectivity for a user, and includes a wireless terminal or a wired terminal. The wireless terminal may be a handheld device having a wireless connection function, or another processing device connected to a wireless modem, or a mobile terminal that communicates with one or more core networks by using a wireless access network. For example, the wireless terminal may be a mobile phone (or referred to as a "cellular" phone) and a computer having a mobile terminal. For another example, the wireless terminal may also be a portable, a pocket-sized, a handheld, or an in-vehicle mobile apparatus, or a mobile apparatus built in a computer. For still another example, the wireless terminal may be a mobile station (English: mobile station).

A base station may refer to a device that is on an access network and that communicates with a wireless terminal on an air interface by using one or more cells. For example, a base station may be a GSM (English: Global System for Mobile Communications, Global System for Mobile Communications for short) or CDMA (English: Code Division Multiple Access, Code Division Multiple Access for short) base station (English: base transceiver station, BTS for short), or may be a WCDMA (English: Wideband Code Division Multiple Access, Wideband Code Division Multiple Access for short) base station (English: NodeB), or may be an LTE (English: Long Term Evolution, Long Term Evolution for short) evolved NodeB (English: evolutional Node B, eNB or e-NodeB for short), or may be a base station on a subsequent evolved network, which is not limited in the present invention.

### Embodiment 1

Based on the architectural diagram of the system shown in FIG. 1, this embodiment provides a data transmission method. As shown in FIG. 2, the method includes:
202. A base station sends a first indication message to UE, where the first indication message is used to instruct the UE to adjust a WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP.

Specifically, the first indication message includes at least one of a WLAN activation message and a power saving mode cancellation indication message. The WLAN activation message is used to: when the WLAN module in the UE is in a disabled state, instruct the UE to enable the WLAN module and set the WLAN module to the non-power saving mode. The power saving mode cancellation indication message is used to: when the WLAN module in the UE is in an enabled state but the WLAN module is in a power saving mode, instruct the UE to adjust the WLAN module to the non-power saving mode.

204. The base station sends to-be-offloaded data to the wireless local area network access point WLAN AP, so that the WLAN AP sends the to-be-offloaded data to the UE according to the non-power saving mode of the UE, where the non-buffered data includes the to-be-offloaded data.

To facilitate understanding, this embodiment describes the power saving mode of the WLAN module in detail.

A WLAN technology defines the power saving mode (PSM, Power Saving Mode), and in the power saving mode, the WLAN module in the UE includes two states: a doze state (doze state) and an awake state (awake state). In the power saving mode, a working process of the WLAN module is approximately as follows: The WLAN AP allocates an association identifier (Association ID, AID) to the WLAN module; the WLAN module and the WLAN AP negotiate a listening interval, that is, a period in which the WLAN module listens for a Beacon frame is determined; the WLAN AP receives data from the base station and buffers the data, and sends a Beacon frame to the WLAN module periodically; the WLAN module switches from the doze state to the awake state during the listening interval, and listens for the Beacon frame delivered by the WLAN AP; and if the WLAN module listens and acquires the associated AID from the Beacon frame, the WLAN module sends a PS-Poll command to the WLAN AP, and acquires the buffered data from the WLAN AP, where the WLAN command is used to instruct the WLAN AP to send the buffered data to the WLAN module.

The WLAN module is switched to the non-power saving mode by using step 201, and in the non-power saving mode, the WLAN module remains in the awake state; therefore, the WLAN module can acquire data from the WLAN AP in real time. It should be noted that because the WLAN module remains in the awake state in the non-power saving mode, the WLAN AP can send to-be-offloaded data to the WLAN module in real time. In this way, after receiving to-be-offloaded data delivered by the base station, the WLAN AP does not need to buffer the to-be-offloaded data, and may directly send the to-be-offloaded data to the UE, which can effectively reduce a transmission delay of the to-be-offloaded data.

It should be noted that in this embodiment, it may be preconfigured that step 202 is triggered only after the base station performs step 201, that is, the base station performs, by using the WLAN AP, data offloading only after setting the WLAN module in the UE to the non-power saving mode; meanwhile, it may be configured that the WLAN module in the UE is in the non-power saving mode by default when the WLAN AP receives to-be-offloaded data sent by the base station, thereby sending the to-be-offloaded data to the UE in real time.

In the present invention, the WLAN includes, but is not limited to, at least a wireless fidelity (WiFi, Wireless Fidelity) network and a wireless local area network authentication and privacy infrastructure (WAPI, Wireless LAN Authentication and Privacy Infrastructure) network.

In the data transmission method provided in this embodiment of the present invention, a base station may send a first indication message to UE, to instruct the UE to adjust a WLAN module to a non-power saving mode, and the base station sends to-be-offloaded data to a WLAN AP. Because the WLAN module in the UE is in the non-power saving mode, the WLAN AP may send the to-be-offloaded data to the UE in real time. Compared with the prior art, in the method provided in this embodiment, when the base station performs data offloading by using the WLAN AP, the WLAN module in the UE may be set to the non-power saving mode, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

Based on the data transmission method shown in FIG. 2, in a first possible implementation manner, step 203 is further included before step 204, and is specifically as follows:
203. The base station sends a second indication message to the WLAN AP, where the second indication message is used to indicate that the WLAN module is in the non-power saving mode, so that the WLAN AP sends the to-be-offloaded data to the UE, where
   the second indication message includes an identity of the UE.

In step 203, the WLAN AP can determine that the WLAN module in the UE is in the non-power saving mode. In this way, after receiving to-be-offloaded data delivered by the base station, the WLAN directly sends the to-be-offloaded data to the UE without buffering the to-be-offloaded data, which reduces a transmission delay of the to-be-offloaded data.

In a second possible implementation manner, step 201 is further included before step 202, and is specifically as follows:
201. The base station determines data information about the to-be-offloaded data, where the data information includes at least one of the following: a data volume of the to-be-offloaded data and a delay requirement of the to-be-offloaded data.

Based on step 201, the following specific implementation manner may be used in step 202: When determining that the data volume of the to-be-offloaded data is greater than or equal to a first threshold and/or determining that the delay requirement of the to-be-offloaded data is less than or equal to a second threshold, the base station sends the first indication message to the UE.

In the foregoing steps 201 and 202, the base station may send the first indication message to the UE in a targeted manner according to the data information about the to-be-offloaded data. Using this method can avoid a problem of high power consumption of the UE caused by blindly sending the first indication message to the UE.

In a third possible implementation manner, the following steps are further included before step 202:
S1. The base station receives a WLAN power saving mode indication message sent by the UE, where the WLAN power saving mode indication message is used to indicate that the WLAN module is in a power saving mode, and the WLAN power saving mode indication message includes an association identifier AID allocated to the UE by the WLAN AP.
   The AID is used to trigger the UE to send a PS-Poll command to the WLAN AP, and the PS-Poll command is used to instruct the WLAN AP to send to-be-offloaded data to the UE.
S2. The base station receives a beacon Beacon frame sent by the WLAN AP.
S3. The base station adds the AID to the Beacon frame, and sends the Beacon frame to the UE, so that the UE listens for the Beacon frame and determines, according to the AID acquired by means of listening, to receive the to-be-offloaded data.

It should be noted that, because the base station and the UE can perform communication in real time by using a 3GPP mobile communications network, in the foregoing steps S1 to S3, the WLAN AP may forward the Beacon frame carrying the AID to the UE in real time by using the base station. Using this method, the WLAN module can be instantly awakened even if the WLAN module in the UE is in the doze state, and the WLAN module is switched from the doze state to the awake state. In this way, the WLAN module acquires to-be-offloaded data from the WLAN AP, and sends the to-be-offloaded data to the UE, which reduces a transmission delay of the to-be-offloaded data.

Based on the foregoing steps S1 to S3, step 202 specifically includes: The base station sends a WLAN activation message to the UE, where the WLAN activation message is used to instruct the UE to enable the WLAN module and adjust the WLAN module to the non-power saving mode, and the WLAN activation message includes the Beacon frame that carries the AID, so that the UE instructs, according to the AID, the WLAN AP to send the to-be-offloaded data to the UE.

### Embodiment 2

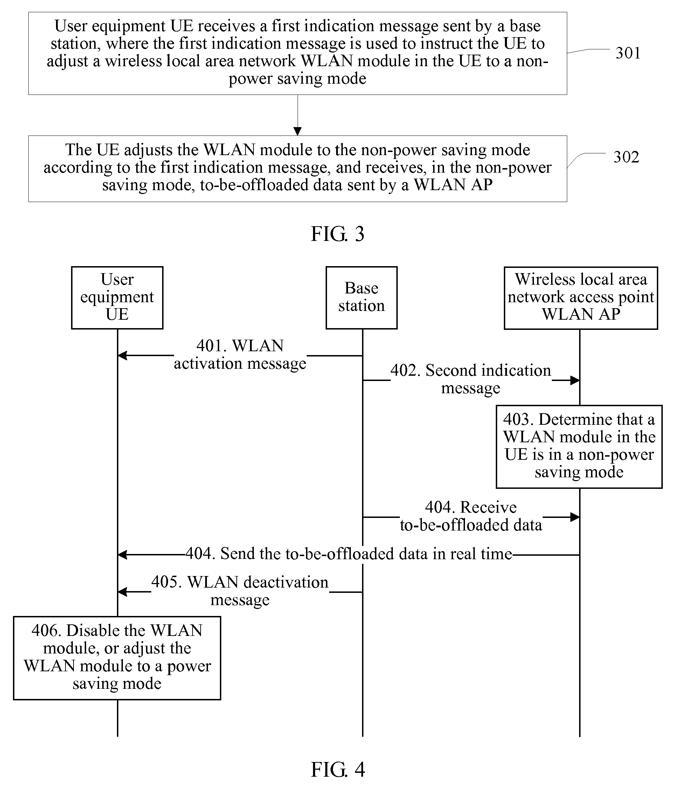

Based on the architectural diagram of the system shown in FIG. 1, this embodiment provides a data transmission method. As shown in FIG. 3, the method includes:
301. User equipment UE receives a first indication message sent by a base station, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP.
   Specifically, the first indication message includes at least one of a WLAN activation message and a power saving mode cancellation indication message. The WLAN activation message is used to: when the WLAN module in the UE is in a disabled state, instruct the UE to enable the WLAN module and set the WLAN module to the non-power saving mode. The power saving mode cancellation indication message is used to: when the WLAN module in the UE is in an enabled state but the WLAN module is in a power saving mode, instruct the UE to adjust the WLAN module to the non-power saving mode.
302. The UE adjusts the WLAN module to the non-power saving mode according to the first indication message, and receives, in the non-power saving mode, to-be-offloaded data sent by the WLAN AP, where the non-buffered data includes the to-be-offloaded data.

To facilitate understanding, this embodiment describes the power saving mode of the WLAN module in detail.

A WLAN technology defines the power saving mode (PSM), and in the power saving mode, the WLAN module in the UE includes two states: a doze state (doze state) and an awake state (awake state). In the power saving mode, a working process of the WLAN module is approximately as follows: The WLAN AP allocates an association identifier (Association ID, AID) to the WLAN module; the WLAN module and the WLAN AP negotiates an listening interval, that is, a period in which the WLAN module listens for a Beacon frame is determined; the WLAN AP receives data from the base station and buffers the data, and sends a Beacon frame to the WLAN module periodically; the WLAN module switches from the doze state to the awake state during the listening interval, and listens for the Beacon frame delivered by the WLAN AP; and if the WLAN module listens and acquires the associated AID from the Beacon frame, the WLAN module sends a PS-Poll command to the WLAN AP, and acquires the buffered data from the WLAN AP, where the WLAN command is used to instruct the WLAN AP to send the buffered data to the WLAN module.

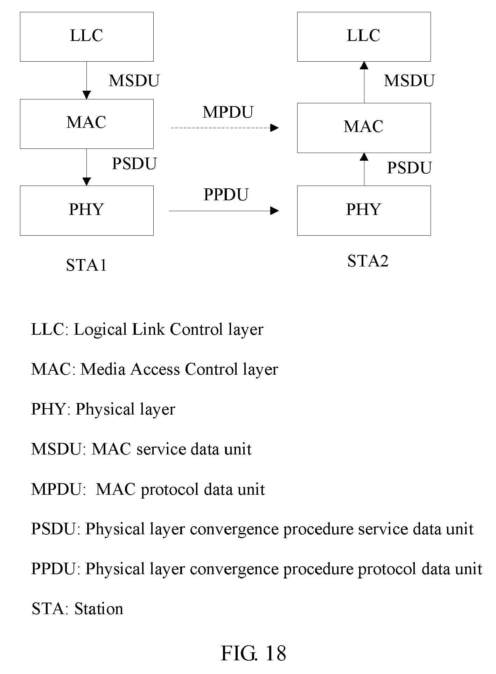

Specifically, the WLAN module in the UE is supported by a WLAN protocol stack, and the UE may adjust the WLAN module to the non-power saving mode by using a MAC layer in the WLAN protocol stack. An embodiment of the present invention provides a schematic diagram of a structure of a WLAN protocol stack for reference. For details, refer to FIG. 18.

To facilitate understanding, various parts in the WLAN protocol stack shown in FIG. 18 are described as follows:
STA1 and STA2 indicate stations, and may be understood as UEs in this embodiment.
LLC: Logical Link Control, Logical Link Control layer. Main functions of the LLC sublayer include: transmission reliability ensuring and control, data packet segmentation and reassembly, and data packet sequential transmission.
MAC: Media Access Control, Media Access Control layer. Main functions of the MAC sublayer include: providing reliable data transmission for a user on an unreliable medium, a distributed coordination function, centralized access control mechanism, an encryption service, sensing and backoff, power control, operation mode control, and the like.
PHY: Physical Layer, physical layer. Main functions of the physical layer are a PLCP (physical layer convergence procedure, physical layer convergence procedure) and PMD (physical medium dependent, physical medium dependent), where the PLCP defines a method for mapping a data block into a suitable physical frame format, and the PMD defines some features such as receiving and sending, for example, a modulation and coding scheme.
MSDU: MAC Service Data Unit, MAC service data unit.
MPDU: MAC protocol Data Unit, MAC protocol data unit.
PSDU: PLCP service data unit, PLCP service data unit.
PPDU: PLCP Protocol Data Unit, PLCP protocol data unit.

In step 301, the UE switches the WLAN module to the non-power saving mode. In the non-power saving mode, the WLAN module remains in the awake state, and can acquire data from the WLAN AP in real time. It should be noted that because the WLAN module remains in the awake state in the non-power saving mode, the WLAN module can continuously acquire to-be-offloaded data from the WLAN AP in real time. In this way, after receiving to-be-offloaded data delivered by the base station, the WLAN AP does not need to buffer the to-be-offloaded data, and may directly send the to-be-offloaded data to the UE, which can effectively reduce a transmission delay of the to-be-offloaded data.

In the present invention, the WLAN includes, but is not limited to, at least a wireless fidelity (WiFi, Wireless Fidelity) network and a wireless local area network authentication and privacy infrastructure (WAPI, Wireless LAN Authentication and Privacy Infrastructure) network.

In the data transmission method provided in this embodiment of the present invention, the UE receives the first indication message sent by the base station, adjusts the WLAN module to the non-power saving mode according to the first indication message, and continuously acquires, in the non-power saving mode, to-be-offloaded data from the WLAN AP in real time. Because the WLAN module in the UE is in the non-power saving mode, the WLAN AP does not need to buffer to-be-offloaded data, and may directly send the to-be-offloaded data to the UE in real time. Compared with the prior art, in the method provided in this embodiment, when the base station performs data offloading by using the WLAN AP, the UE may set the WLAN module in the UE to the non-power saving mode according to the first indication message sent by the base station, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

Based on the data transmission method shown in FIG. 3, in a first possible implementation manner, when the WLAN module in the UE is in a disabled state, the first indication message is a WLAN activation message.

Step 301 specifically includes: The UE receives a WLAN activation message sent by the base station, enables the WLAN module according to the WLAN activation message, and adjusts the WLAN module to the non-power saving mode.

In a second possible implementation manner, when the WLAN module in the UE is in an enabled state but the WLAN module is in a power saving mode, the first indication message is a power saving mode cancellation indication message.

Step 301 specifically includes: The UE receives a power saving mode cancellation indication message sent by the base station, and adjusts the WLAN module to the non-power saving mode according to the power saving mode cancellation indication message.

In a third possible implementation manner, before step 301, steps S1 to S3 are further included, and are specifically as follows:
S1. The UE sends a WLAN power saving mode indication message to the base station, where the WLAN power saving mode indication message is used to indicate that the WLAN module is in a power saving mode, and the WLAN power saving mode indication message includes an association identifier AID allocated to the UE by the WLAN AP.
S2. The UE receives a beacon Beacon frame sent by the base station, where the Beacon frame carries the AID.
   The AID is used to trigger the UE to send a PS-Poll command to the WLAN AP, and the PS-Poll command is used to instruct the WLAN AP to send to-be-offloaded data to the UE.
S3. The UE listens for the Beacon frame and acquires the AID, determines, according to the AID, to receive the to-be-offloaded data sent by the WLAN AP, and instructs the WLAN AP to send the to-be-offloaded data to the UE.

It should be noted that because the UE and the base station can perform communication in real time by using a 3GPP mobile communications network, in the foregoing steps S1 to S3, the UE may use the base station to acquire, in real time, the Beacon frame carrying the AID. Using this method, the WLAN module can be instantly awakened even if the WLAN module in the UE is in the doze state, and the WLAN module is switched from the doze state to the awake state. In this way, the WLAN module acquires to-be-offloaded data from the WLAN AP, and sends the to-be-offloaded data to the UE, which reduces a transmission delay of the to-be-offloaded data.

Based on the foregoing steps S1 to S3, step 301 specifically includes: The UE receives a WLAN activation message sent by the base station, where the WLAN activation message is used to instruct the UE to enable the WLAN module and adjust the WLAN module to the non-power saving mode, and the WLAN activation message includes the Beacon frame that carries the AID; and the UE acquires the Beacon frame from the WLAN activation message, acquires the AID from the Beacon frame, and sends, according to the AID, a power saving polling PS-Poll command to the WLAN AP, where the PS-Poll command is used to instruct the WLAN AP to send the to-be-offloaded data to the user equipment.

### Embodiment 3

With reference to the methods provided in Embodiment 1 and Embodiment 2, this embodiment of the present invention provides a data transmission method. As shown in FIG. 4, the method includes:
401. When determining that data offloading needs to be performed by using a WLAN AP, a base station sends a WLAN activation message to UE, where the WLAN activation message is used to instruct the UE to enable a WLAN module and adjust the WLAN module to a non-power saving mode.

It should be noted that in this embodiment, the base station does not need to know a working state of a WLAN of the UE. After the UE receives the WLAN activation message sent by the base station, the UE performs the following possible operations according to a state of the WLAN module:
when the WLAN module in the UE is in a disabled state, enabling, by the UE, the WLAN module and setting the WLAN module to the non-power saving mode; or
when the WLAN module in the UE is in an enabled state but the WLAN module is in a power saving mode, adjusting, by the UE, the WLAN module to the non-power saving mode; or
when the WLAN module in the UE is in an enabled state and the WLAN module is in the non-power saving mode, maintaining, by the UE, the non-power saving mode of the WLAN module.

It should be noted that to avoid that a user disables the WLAN module or adjusts the WLAN module to the power saving mode in a data offloading process, the WLAN activation message is further used to instruct the UE to display prompt information on a user interface, where the prompt information is used to prompt the user not to enable the WLAN power saving mode, to ensure successful transmission of to-be-oflloaded data.

402. The base station sends a second indication message to the WLAN AP, where the second indication message is used to notify the WLAN AP that the WLAN module in the UE is in the non-power saving mode, so that the WLAN AP sends service data to the UE in real time, where the second indication message includes an identity of the UE.

403. The WLAN AP receives the second indication message, and determines, according to the second indication message, that the WLAN module in the UE is in the non-power saving mode.

404. The WLAN AP receives to-be-offloaded data sent by the base station, and directly sends the to-be-offloaded data to the UE in real time without buffering the to-be-offloaded data.

Different from the prior art, in this embodiment, because the WLAN AP already knows that the WLAN module in the UE is in the non-power saving mode, the WLAN AP may not need to buffer the to-be-offloaded data, and may directly send the received to-be-offloaded data to the UE in real time.

405. The base station determines that sending of the to-be-offloaded data is completed, and sends a WLAN deactivation message to the UE, where the WLAN deactivation message is used to instruct the UE to disable the WLAN module or instruct the UE to adjust the WLAN module to a power saving mode.

406. The UE disables the WLAN module according to the WLAN deactivation message, or adjusts the WLAN module to the power saving mode.

In the data transmission method provided in this embodiment of the present invention, a base station may send a WLAN activation message to UE, so that the UE adjusts a WLAN module to a non-power saving mode, and the base station sends to-be-offloaded data to a WLAN AP. Because the WLAN module in the UE is in the non-power saving mode, the WLAN AP may send the to-be-offloaded data to the UE in real time. Compared with the prior art, in the method provided in this embodiment, when the base station performs data offloading by using the WLAN AP, the WLAN module in the UE may be set to the non-power saving mode, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

### Embodiment 4

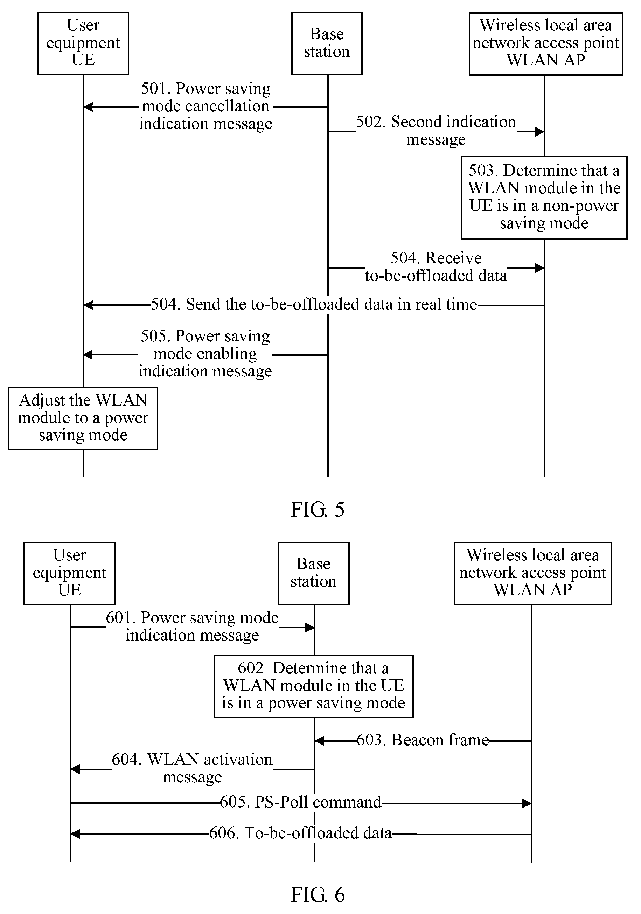

With reference to the methods provided in Embodiment 1 and Embodiment 2, this embodiment of the present invention provides a data transmission method. As shown in FIG. 5, the method includes:

501. Abase station sends a power saving mode cancellation indication message to UE, where the power saving mode cancellation indication message is used to instruct the UE to adjust a WLAN module to a non-power saving mode.

Specifically, this technical solution provided in this embodiment is applicable to a scenario in which the WLAN module in the UE is already enabled but is in a power saving mode. To satisfy an individual demand of a user as much as possible while ensuring that to-be-offloaded data is transmitted in real time, in step 501, the following method may be specifically used:
S 1. When determining that data offloading needs to be performed by using a WLAN AP, the base station may determine data information about to-be-offloaded data, where the data information includes at least one of a data volume and a delay requirement.
S2. When determining that the data volume of the to-be-offloaded data is greater than or equal to a first threshold and/or determining that the delay requirement of the to-be-offloaded data is less than or equal to a second threshold, the base station sends the power saving mode cancellation indication message to the UE.

In the foregoing steps S1 and S2, the base station sends the power saving mode cancellation indication message to the UE only when the data volume of the to-be-offloaded data is relatively large or the to-be-offloaded data has a relatively high delay requirement. The base station does not need to send the power saving mode cancellation indication message to the UE if the data volume of the to-be-offloaded data is relatively small or the to-be-offloaded data has a relatively low delay requirement. Using this method, on the one hand, the UE can set a working state of the WLAN module according to an individual demand of a user, and on the other hand, a problem of high power consumption of the UE caused by blindly sending the power saving mode cancellation indication message to the UE by the base station can be avoided.

502. The base station sends a second indication message to the WLAN AP, where the second indication message is used to notify the WLAN AP that the WLAN module in the UE is in the non-power saving mode, so that the WLAN AP sends service data to the UE in real time, where the second indication message includes an identity of the UE.

503. The WLAN AP receives the second indication message sent by the base station, and determines, according to the second indication message, that the WLAN module in the UE is in the non-power saving mode.

504. The WLAN AP receives to-be-offloaded data sent by the base station, and directly sends the to-be-offloaded data to the UE in real time without buffering the to-be-offloaded data.

Because the WLAN AP already determines that the WLAN module in the UE is in the non-power saving mode, the WLAN AP may send the to-be-offloaded data to the UE in real time after receiving the to-be-offloaded data. In another aspect, because the UE already adjusts the WLAN module to the non-power saving mode in advance after receiving the power saving mode cancellation indication message, the UE can acquire, in real time, the to-be-offloaded data sent by the WLAN AP, thereby ensuring that the to-be-offloaded data is reliably transmitted in real time.

505. The base station determines that sending of the to-be-offloaded data is completed, and/or determines that the data volume of the to-be-offloaded data is less than the first threshold, and/or determines that the delay requirement of the to-be-offloaded data is high than the second threshold; and sends a power saving mode enabling indication message to the UE, where the power saving mode enabling indication message is used to instruct the UE to adjust the WLAN module to a power saving mode.

In step 505, when the base station determines that sending of the to-be-offloaded data is completed or determines that it is unnecessary to send the to-be-offloaded data in real time, the WLAN module in the UE may be set to the power saving mode, to save electricity for the UE.

In the data transmission method provided in this embodiment of the present invention, a base station may send a power saving mode cancellation indication message to UE, so that the UE adjusts a WLAN module to a non-power saving mode, and the base station sends to-be-offloaded data to a WLAN AP. Because the WLAN module in the UE is in the non-power saving mode, the WLAN AP may send the to-be-offloaded data to the UE in real time. Compared with the prior art, in the method provided in this embodiment, when the base station performs data offloading by using the WLAN AP, the WLAN module in the UE may be set to the non-power saving mode, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

### Embodiment 5

With reference to the methods provided in Embodiment 1 and Embodiment 2, this embodiment of the present invention provides a data transmission method. As shown in FIG. 6, the method includes:
601. UE determines that a WLAN module is in a power saving mode, and sends a WLAN power saving mode indication message to a base station, where the WLAN power saving mode indication message is used to notify the base station that the WLAN module in the UE is in the power saving mode.
   In this embodiment, the WLAN power saving mode indication message includes an association identifier (Association ID, AID) allocated to the WLAN module in the UE by a WLAN AP. The WLAN AP is an AP that the UE currently accesses, that is, the UE currently accesses the WLAN AP, and performs, in the power saving mode, data transmission with the WLAN AP.
602. The base station receives the WLAN power saving mode indication message sent by the UE, and determines, according to the WLAN power saving mode indication message, that the WLAN module in the UE is in the power saving mode.
603. The base station receives a Beacon frame sent by a WLAN AP.
   It should be noted that time sequences between step 603 and step 601 and between step 603 and step 602 are not limited, and step 603 may be performed before step 601, or may be performed between step 601 and step 602, or may be performed after step 602, which is not limited in this embodiment.
604. The base station determines that data offloading needs to be performed by using the WLAN AP, sends a WLAN activation message to the UE, and sends to-be-offloaded data to the WLAN AP, where the WLAN activation message carries the Beacon frame, and the Beacon frame carries an AID.
605. The UE receives the WLAN activation message, acquires the Beacon frame from the WLAN activation message, and forwards the Beacon frame to the WLAN module in the UE; and the WLAN module detects the AID in the Beacon frame, and sends a PS-Poll command to the WLAN AP according to the AID, where the PS-Poll command is used to instruct the WLAN AP to send the to-be-offloaded data to the UE.

It should be noted that in the prior art, when the WLAN module in the UE is in the power saving mode, the WLAN module periodically listens for a Beacon frame during a listening interval, that is, the WLAN module periodically listens for a Beacon frame. In one period, the WLAN module is in an awake state during the listening interval, and is in a doze state in other time segments. In step 605, the UE may acquire the Beacon frame from the base station, and send the Beacon frame to the WLAN module to awaken the WLAN module. In step 605, although the WLAN module is currently in the doze state, it can still be ensured that the WLAN module is awakened in time, to trigger the WLAN module to send the PS-Poll command to the WLAN AP and acquire the to-be-offloaded data from the WLAN AP.

606. The WLAN AP receives the PS-Poll command, determines, according to the PS-Poll command, that the WLAN module in the UE currently can receive data, and sends the to-be-offloaded data to the UE.

In the data transmission method provided in this embodiment of the present invention, when a base station needs to perform data offloading by using a WLAN AP, the base station may send, to UE, a WLAN activation message carrying a Beacon frame, to awaken a WLAN module in the UE and trigger the WLAN module to send a PS-Poll command to the WLAN AP, thereby acquiring to-be-offloaded data from the WLAN AP in real time. Compared with the prior art, in the method provided in this embodiment, when the base station performs data offloading by using the WLAN AP, the base station may awaken the WLAN module in the UE by sending a Beacon frame to the UE, so that the WLAN module is in an awake state, thereby acquiring to-be-offloaded data from the WLAN AP in real time and ensuring that to-be-offloaded data is transmitted in real time.

### Embodiment 6

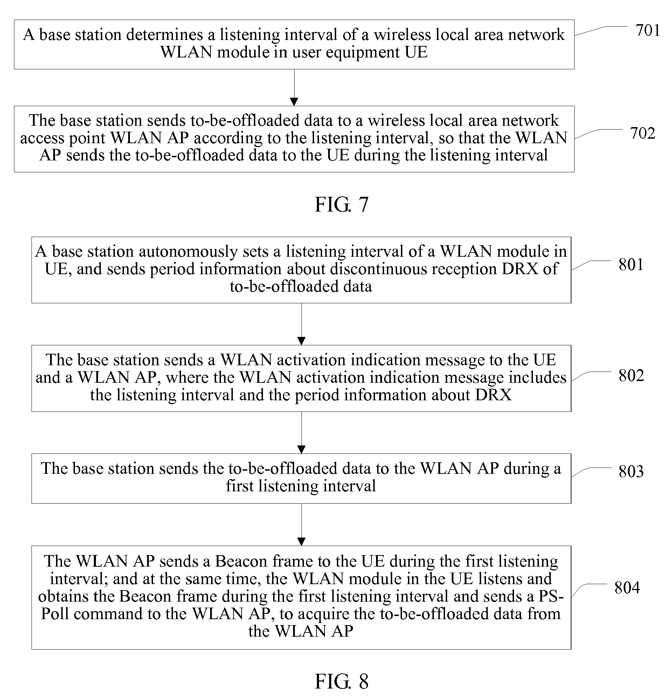

This embodiment of the present invention provides a data transmission method, which may be implemented based on the architectural diagram of the system shown in FIG. 1. As shown in FIG. 7, the method includes:
701. A base station determines a listening interval of a wireless local area network WLAN module in user equipment UE.
   It should be noted that the method provided in this embodiment is applicable to a scenario in which a base station needs to perform data offloading by using a WLAN AP. Specifically, the base station may autonomously set the listening interval of the WLAN module according to a data volume of to-be-offloaded data and/or a delay requirement of to-be-offloaded data, or the base station may determine the listening interval of the WLAN module in the UE by using a listening report reported by the UE or the WLAN AP.
702. The base station sends to-be-offloaded data to a wireless local area network access point WLAN AP according to the listening interval, so that the WLAN AP sends the to-be-offloaded data to the UE during the listening interval.

It should be noted that in an actual application, the UE may determine a transmission time point according to the listening interval of the UE with reference to a transmission time that is needed to send the to-be-offloaded data from the base station to the WLAN AP, and send the to-be-offloaded data to the WLAN AP at the transmission time point. For example, the base station determines that the listening interval of the WLAN module in the UE is at a time point T1, and a transmission delay caused by sending the to-be-offloaded data from the base station to the WLAN AP is ΔT; and in this case, the base station may send the to-be-offloaded data to the WLAN AP at a time point (T1-ΔT), so that the WLAN receives the to-be-offloaded data at the time point T1. Because at the time point T1, the WLAN module in the UE is in the listening interval, the WLAN can send the to-be-offloaded data to the UE in time.

In the data transmission method provided in this embodiment, a base station can determine a listening interval of a WLAN module in UE, and send to-be-offloaded data to a WLAN AP according to the listening interval, so that the WLAN AP receives the to-be-offloaded data and sends the to-be-offloaded data to the UE during the listening interval. Using the data transmission method provided in this embodiment, a base station determines a listening interval of a WLAN module in UE, to ensure that a WLAN receives to-be-offloaded data during the listening interval. Because the WLAN module in the UE listens, during the listening interval, for a Beacon frame sent by a WLAN AP, the WLAN AP can send the to-be-offloaded data to the UE in real time, thereby ensuring that the to-be-offloaded data is transmitted in real time.

### Embodiment 7

Based on the method provided in Embodiment 6, this embodiment of the present invention provides a data transmission method. As shown in FIG. 8, the method includes:
801. A base station autonomously sets a listening interval of a WLAN module in UE according to a data volume of to-be-offloaded data and/or according to a transmission delay requirement of the to-be-offloaded data, and sends period information about discontinuous reception (Discontinuous Reception, DRX) of the to-be-offloaded data.
802. The base station sends a WLAN activation indication message to the UE and a WLAN AP, where the WLAN activation indication message includes the listening interval and the period information about DRX.

Specifically, if the base station determines that the data volume of the to-be-offloaded data is relatively small (not large enough to occupy one data frame sent to the UE by the WLAN AP) and that the to-be-offloaded data has a relatively low delay requirement, the base station can estimate a time point (this time point may be recorded as a first listening interval) at which the data volume of the to-be-offloaded data reaches a threshold (for example, can occupy at least one data frame sent to the UE by the WLAN AP) or the delay requirement of the to-be-offloaded data reaches a threshold, and determine the listening interval and the period information about DRX according to the time point.

803. The base station sends the to-be-offloaded data to the WLAN AP during the first listening interval.

804. The WLAN AP determines the first listening interval according to the listening interval and the period information about DRX, and sends a Beacon frame to the UE during the first listening interval; and at the same time, the WLAN module in the UE determines the first listening interval according to the listening interval and the period information about DRX, and listens and acquires the Beacon frame during the first listening interval and sends a PS-Poll command to the WLAN AP, to acquire the to-be-offloaded data from the WLAN AP.

In steps 803 and 804, sending, by the base station, the to-be-offloaded data to the WLAN AP, sending, by the WLAN AP, the Beacon frame to the UE, and listening, by the UE, for the Beacon frame sent by the WLAN AP are all performed at the same time point (that is, the first listening interval), which can ensure that the WLAN AP sends the to-be-offloaded data to the UE.

In the data transmission method provided in this embodiment, a base station sets a listening interval, and sends to-be-offloaded data to a WLAN AP according to the listening interval, so that a time point at which the WLAN AP receives the to-be-offloaded data is consistent with a time point at which a WLAN module in UE is awakened (that is, a time point at which the WLAN module listens for a Beacon frame sent by the WLAN AP), thereby ensuring that the to-be-offloaded data can be sent to the UE in time. Compared with the prior art, in this method, when a base station needs to perform data offloading by using a WLAN AP, a problem that the to-be-offloaded data cannot be received in time because the WLAN module in the UE is in a doze state can be avoided, thereby reducing a data receiving delay.

### Embodiment 8

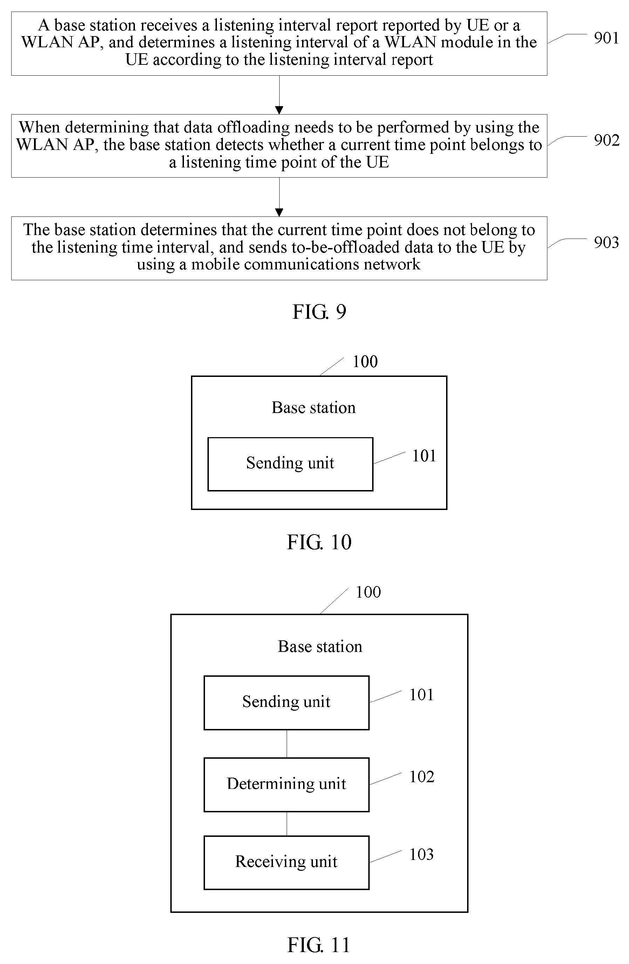

Based on the method provided in Embodiment 6, this embodiment of the present invention provides a data transmission method. As shown in FIG. 9, the method includes:
901. A base station receives a listening interval report reported by UE or a WLAN AP, and determines a listening interval of a WLAN module in the UE according to the listening interval report.
   The listening interval report includes a listening interval during which the WLAN in the UE receives a Beacon frame in a power saving mode.
902. When determining that data offloading needs to be performed by using the WLAN AP, the base station detects whether a current time point belongs to a listening time point of the UE.
903. The base station determines that the current time point does not belong to the listening interval, and sends to-be-offloaded data to the UE by using a mobile communications network.

It should be noted that the method provided in this embodiment is applicable to the following scenario: The to-be-offloaded data is delay-sensitive data (which has a relatively high delay requirement), or the to-be-offloaded data has a relatively large data volume and needs to be transmitted in time (if the to-be-offloaded data is not transmitted in time, network congestion may be caused).

In another aspect, if the to-be-offloaded data does not need to be transmitted in real time (for example, a delay requirement is relatively low, or a data volume of the offloaded data is small), the base station may send the to-be-offloaded data to the WLAN AP, and the WLAN AP receives a PS-Poll command that is sent by the UE during the listening interval, and sends the to-be-offloaded data to the UE.

In the data transmission method provided in this embodiment, an offloading network may be selected according to a specific type of to-be-offloaded data; if the to-be-offloaded data needs to be transmitted in real time and a current time point does not belong to a listening time point of UE, a base station may send the to-be-offloaded data to the UE by using a mobile communications network, to ensure that the to-be-offloaded data can be sent to the UE in real time; and if the to-be-offloaded data does not need to be transmitted in real time, a base station may send the to-be-offloaded data to the UE by using a WLAN, which can reduce load of a mobile communications network.

### Embodiment 9

This embodiment of the present invention provides a base station, which can implement the methods on a base-station side in the foregoing method embodiments. As shown in FIG. 10, a base station 100 provided in this embodiment includes:
a sending unit 101, configured to send a first indication message to user equipment UE, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP, where
the sending unit 101 is further configured to send to-be-offloaded data to the WLAN AP, so that the WLAN AP sends the to-be-offloaded data to the UE according to the non-power saving mode of the UE, where the non-buffered data includes the to-be-offloaded data.

Specifically, the sending unit 101 is configured to send a WLAN activation message to the UE, where the WLAN activation message is used to instruct the UE to enable the WLAN module and adjust the WLAN module to the non-power saving mode; and
the sending unit 101 is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

Specifically, the sending unit 101 is configured to send a power saving mode cancellation indication message to the UE, where the power saving mode cancellation indication message is used to instruct the UE to adjust the WLAN module to the non-power saving mode; and
the sending unit 101 is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

Further, as shown in FIG. 11, the base station 100 further includes:
a determining unit 102, configured to determine information about the to-be-offloaded data, where the information about the to-be-offloaded data includes at least one of the following: a data volume of the to-be-offloaded data and a delay requirement of the to-be-offloaded data, where
the sending unit 101 is specifically configured to: when the determining unit 102 determines that the data volume of the to-be-offloaded data is greater than or equal to a first threshold and/or the determining unit 102 determines that the delay requirement of the to-be-offloaded data is less than or equal to a second threshold, send the first indication message to the UE.

As shown in FIG. 11, the base station 100 further includes:
a receiving unit 103, configured to receive a WLAN power saving mode indication message sent by the UE, where the WLAN power saving mode indication message is used to indicate that the WLAN module is in a power saving mode, and the WLAN power saving mode indication message includes an association identifier AID allocated to the UE by the WLAN AP, where
the receiving unit 103 is further configured to receive a beacon Beacon frame sent by the WLAN AP; and
the sending unit 101 is further configured to add the AID to the Beacon frame and send the Beacon frame to the UE, so that the UE listens for the Beacon frame and determines, according to the AID acquired by means of listening, to receive the to-be-offloaded data.

Specifically, the sending unit 101 is configured to send a WLAN activation message to the UE, where the WLAN activation message is used to instruct the UE to enable the WLAN module and adjust the WLAN module to the non-power saving mode, and the WLAN activation message includes the Beacon frame that carries the AID, so that the UE instructs, according to the AID, the WLAN AP to send the to-be-offloaded data to the UE.

The base station provided in this embodiment of the present invention may send a first indication message to UE, to instruct the UE to adjust a WLAN module to a non-power saving mode, and the base station sends to-be-offloaded data to a WLAN AP. Because the WLAN module in the UE is in the non-power saving mode, the WLAN AP may send the to-be-offloaded data to the UE in real time. Compared with the prior art, when the base station provided in this embodiment performs data offloading by using the WLAN AP, the WLAN module in the UE may be set to the non-power saving mode, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

### Embodiment 10

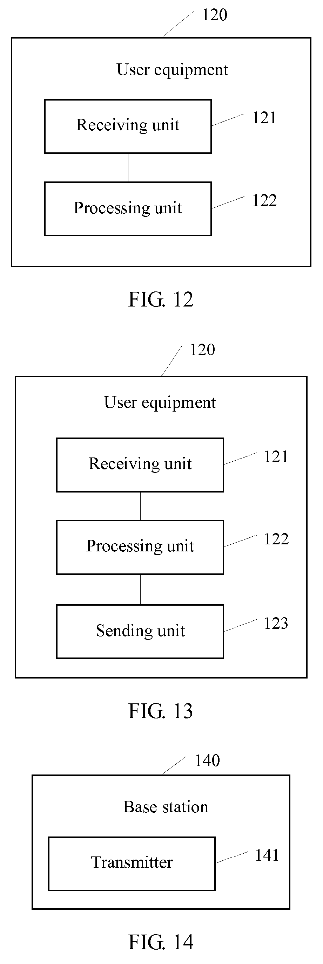

This embodiment of the present invention provides user equipment, which can implement the methods on a UE side in the foregoing method embodiments. As shown in FIG. 12, user equipment 120 provided in this embodiment includes:
a receiving unit 121, configured to receive a first indication message sent by a base station, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
a processing unit 122, configured to adjust the WLAN module to the non-power saving mode according to the first indication message received by the receiving unit 121, where
the receiving unit 121 is further configured to receive, in the non-power saving mode, to-be-offloaded data sent by the WLAN AP, where
the non-buffered data includes the to-be-offloaded data.

Specifically, the receiving unit 121 is configured to receive a WLAN activation message sent by the base station, where the WLAN activation message is used to instruct the UE to enable the WLAN module and adjust the WLAN module to the non-power saving mode.

Specifically, the receiving unit 121 is configured to receive a power saving mode cancellation indication message sent by the base station, where the power saving mode cancellation indication message is used to instruct the UE to adjust the WLAN module to the non-power saving mode.

Further, as shown in FIG. 13, the user equipment 120 further includes:
a sending unit 123, configured to send a WLAN power saving mode indication message to the base station, where the WLAN power saving mode indication message is used to indicate that the WLAN module is in a power saving mode, and the WLAN power saving mode indication message includes an association identifier AID allocated to the UE by the WLAN AP, where
the receiving unit 121 is further configured to receive a beacon Beacon frame sent by the base station, where the Beacon frame carries the AID; and
the processing unit 122 is further configured to listen for the Beacon frame received by the receiving unit 121, and acquire the AID; and determine, according to the AID, to receive the to-be-offloaded data sent by the WLAN AP.

As a possible implementation manner, the receiving unit 121 is specifically configured to receive a WLAN activation message sent by the base station, where the WLAN activation message is used to instruct the UE to enable the WLAN module and adjust the WLAN module to the non-power saving mode, and the WLAN activation message includes the Beacon frame that carries the AID; and
the processing unit 122 is configured to acquire the Beacon frame from the WLAN activation message received by the receiving unit 121, acquire the AID from the Beacon frame, and instruct, according to the AID, the WLAN AP to send the to-be-offloaded data to the UE.

The user equipment provided in this embodiment of the present invention receives a first indication message sent by a base station, adjusts a WLAN module to a non-power saving mode according to the first indication message, and continuously acquires, in the non-power saving mode, to-be-offloaded data from a WLAN AP in real time. Because the WLAN module in the UE is in the non-power saving mode, the WLAN AP does not need to buffer to-be-offloaded data, and may directly send the to-be-offloaded data to the UE in real time. Compared with the prior art, in the UE provided in this embodiment, when the base station performs data offloading by using the WLAN AP, the UE may set the WLAN module in the UE to the non-power saving mode according to the first indication message sent by the base station, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

### Embodiment 11

This embodiment of the present invention provides a base station, which can implement the methods on a base-station side in the foregoing method embodiments of the present invention. As shown in FIG. 14, a base station 140 provided in this embodiment includes:
a transmitter 141, configured to send a first indication message to user equipment UE, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP, where
the transmitter 141 is further configured to send to-be-offloaded data to the WLAN AP, so that the WLAN AP sends the to-be-offloaded data to the UE according to the non-power saving mode of the UE, where the non-buffered data includes the to-be-offloaded data.

Specifically, the transmitter 141 is configured to send a WLAN activation message to the UE, where the WLAN activation message is used to instruct the UE to enable the WLAN module and adjust the WLAN module to the non-power saving mode; and
the transmitter 141 is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

Specifically, the transmitter 121 is configured to send a power saving mode cancellation indication message to the UE, where the power saving mode cancellation indication message is used to instruct the UE to adjust the WLAN module to the non-power saving mode; and
the transmitter 121 is further configured to send a second indication message to the WLAN AP, where the second indication message is used to indicate that the WLAN module is in the non-power saving mode, so that the WLAN AP sends the to-be-offloaded data to the UE, where
the second indication message includes an identity of the UE.

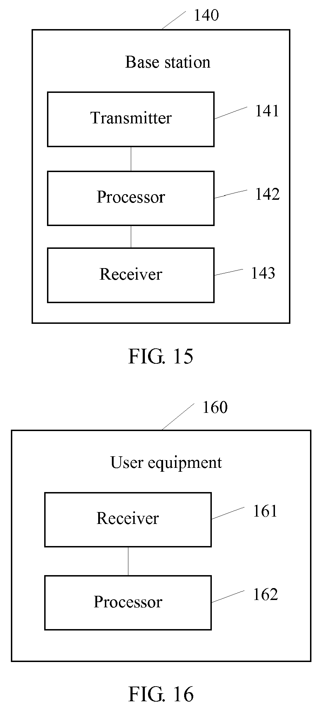

Further, as shown in FIG. 15, the base station 140 further includes:
a processor 142, configured to determine information about the to-be-offloaded data, where the information about the to-be-offloaded data includes at least one of the following: a data volume of the to-be-offloaded data and a delay requirement of the to-be-offloaded data, where
the transmitter 141 is specifically configured to: when the processor 142 determines that the data volume of the to-be-offloaded data is greater than or equal to a first threshold and/or the processor 142 determines that the delay requirement of the to-be-offloaded data is less than or equal to a second threshold, send the first indication message to the UE.

As shown in FIG. 15, the base station 140 further includes:
a receiver 143, configured to receive a WLAN power saving mode indication message sent by the UE, where the WLAN power saving mode indication message is used to indicate that the WLAN module is in a power saving mode, and the WLAN power saving mode indication message includes an association identifier AID allocated to the UE by the WLAN AP, where
the receiver 143 is further configured to receive a beacon Beacon frame sent by the WLAN AP; and
the transmitter 141 is further configured to add the AID to the Beacon frame and send the Beacon frame to the UE, so that the UE listens for the Beacon frame and determines, according to the AID acquired by means of listening, to receive the to-be-offloaded data.

The transmitter 141 is specifically configured to send a WLAN activation message to the UE, where the WLAN activation message is used to instruct the UE to enable the WLAN module and adjust the WLAN module to the non-power saving mode, and the WLAN activation message includes the Beacon frame that carries the AID, so that the UE instructs, according to the AID, the WLAN AP to send the to-be-offloaded data to the UE.

The base station provided in this embodiment of the present invention may send a first indication message to UE, to instruct the UE to adjust a WLAN module to a non-power saving mode, and the base station sends to-be-offloaded data to a WLAN AP. Because the WLAN module in the UE is in the non-power saving mode, the WLAN AP may send the to-be-offloaded data to the UE in real time. Compared with the prior art, when the base station provided in this embodiment performs data offloading by using the WLAN AP, the WLAN module in the UE may be set to the non-power saving mode, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

### Embodiment 12

This embodiment provides user equipment, which can implement the methods on a user-equipment side in the foregoing method embodiments. As shown in FIG. 16, user equipment 160 provided in this embodiment includes:
a receiver 161, configured to receive a first indication message sent by a base station, where the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
a processor 162, configured to adjust the WLAN module to the non-power saving mode according to the first indication message received by the receiver 161, where
the receiver 161 is further configured to receive, in the non-power saving mode, to-be-offloaded data sent by the WLAN AP, where
the non-buffered data includes the to-be-offloaded data.

Specifically, the receiver 161 is configured to receive a WLAN activation message sent by the base station, where the WLAN activation message is used to instruct the UE to enable the WLAN module and adjust the WLAN module to the non-power saving mode.

Specifically, the receiver 161 is configured to receive a power saving mode cancellation indication message sent by the base station, where the power saving mode cancellation indication message is used to instruct the UE to adjust the WLAN module to the non-power saving mode.

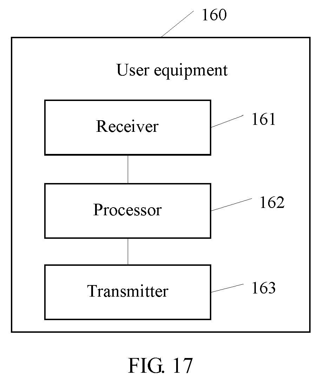

Further, as shown in FIG. 17, the user equipment 160 further includes:
a transmitter 163, configured to send a WLAN power saving mode indication message to the base station, where the WLAN power saving mode indication message is used to indicate that the WLAN module is in a power saving mode, and the WLAN power saving mode indication message includes an association identifier AID allocated to the UE by the WLAN AP, where
the receiver 161 is further configured to receive a beacon Beacon frame sent by the base station, where the Beacon frame carries the AID;
the processor 162 is further configured to listen for the Beacon frame received by the receiver, and acquire the AID; determine, according to the AID, to receive the to-be-offloaded data sent by the WLAN AP; and instruct the WLAN AP to send the to-be-offloaded data to the UE; and
the receiver 161 is configured to receive the to-be-offloaded data sent by the WLAN AP.

Specifically, the receiver 161 is configured to receive a WLAN activation message sent by the base station, where the WLAN activation message is used to instruct the UE to enable the WLAN module and adjust the WLAN module to the non-power saving mode, and the WLAN activation message includes the Beacon frame that carries the AID; and
the processor 162 is configured to acquire the Beacon frame from the WLAN activation message received by the receiver 161, acquire the AID from the Beacon frame, and instruct, according to the AID, the transmitter to send a power saving polling PS-Poll command to the WLAN AP, where the PS-Poll command is used to instruct the WLAN AP to send the to-be-offloaded data to the user equipment.

The user equipment provided in this embodiment of the present invention receives a first indication message sent by a base station, adjusts a WLAN module to a non-power saving mode according to the first indication message, and continuously acquires, in the non-power saving mode, to-be-offloaded data from a WLAN AP in real time. Because the WLAN module in the UE is in the non-power saving mode, the WLAN AP does not need to buffer to-be-offloaded data, and may directly send the to-be-offloaded data to the UE in real time. Compared with the prior art, in the UE provided in this embodiment, when the base station performs data offloading by using the WLAN AP, the UE may set the WLAN module in the UE to the non-power saving mode according to the first indication message sent by the base station, so that the WLAN AP does not need to buffer the to-be-offloaded data. In this way, the to-be-offloaded data can be sent to the UE in real time. Meanwhile, because the WLAN module in the UE is in the non-power saving mode, the to-be-offloaded data can be acquired from the WLAN AP in real time, which ensures real-time transmission of the to-be-offloaded data.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
sending, by a base station, a first indication message to user equipment UE, wherein the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
sending, by the base station, to-be-offloaded data to the WLAN AP, so that the WLAN AP sends the to-be-offloaded data to the UE according to the non-power saving mode of the UE, wherein the non-buffered data comprises the to-be-offloaded data.

2. The method according to claim 1, wherein
the sending, by a base station, a first indication message to UE specifically comprises:
sending, by the base station, a WLAN activation message to the UE, wherein the WLAN activation message is used to instruct the UE to enable the WLAN module and adjust the WLAN module to the non-power saving mode; and
before the sending, by the base station, to-be-offloaded data to the WLAN AP, the method further comprises:
sending a second indication message to the WLAN AP, wherein the second indication message is used to indicate that the WLAN module is in the non-power saving mode, so that the WLAN AP sends the to-be-offloaded data to the UE, wherein
the second indication message comprises an identity of the UE.

3. The method according to claim 1, wherein the sending, by a base station, a first indication message to user equipment UE specifically comprises:
sending, by the base station, a power saving mode cancellation indication message to the UE, wherein the power saving mode cancellation indication message is used to instruct the UE to adjust the WLAN module to the non-power saving mode; and
before the sending, by the base station, to-be-offloaded data to the WLAN AP, the method further comprises:
sending a second indication message to the WLAN AP, wherein the second indication message is used to indicate that the WLAN module is in the non-power saving mode, so that the WLAN AP sends the to-be-offloaded data to the UE, wherein
the second indication message comprises an identity of the UE.

4. The method according to any one of claims 1 to 3, before the sending, by a base station, a first indication message to user equipment UE, further comprising:
determining information about the to-be-offloaded data, wherein the information about the to-be-offloaded data comprises at least one of the following:
a data volume of the to-be-offloaded data and a delay requirement of the to-be-offloaded data; and
the sending, by a base station, a first indication message to user equipment UE specifically comprises:
when determining that the data volume of the to-be-offloaded data is greater than or equal to a first threshold and/or determining that the delay requirement of the to-be-offloaded data is less than or equal to a second threshold, sending the first indication message to the UE.

5. The method according to claim 1, before the sending, by a base station, a first indication message to user equipment UE, further comprising:
receiving, by the base station, a WLAN power saving mode indication message sent by the UE, wherein the WLAN power saving mode indication message is used to indicate that the WLAN module is in a power saving mode, and the WLAN power saving mode indication message comprises an association identifier AID allocated to the UE by the WLAN AP.

6. The method according to claim 5, after the receiving, by the base station, a WLAN power saving mode indication message sent by the UE, further comprising:
receiving, by the base station, a beacon frame sent by the WLAN AP; and
adding, by the base station, the AID to the Beacon frame, and sending the Beacon frame to the UE, so that the UE listens for the Beacon frame and determines, according to the AID acquired by means of listening, to receive the to-be-offloaded data.

7. The method according to claim 6, wherein the sending, by a base station, a first indication message to user equipment UE specifically comprises:
sending a WLAN activation message to the UE, wherein the WLAN activation message is used to instruct the UE to enable the WLAN module and adjust the WLAN module to the non-power saving mode, and the WLAN activation message comprises the Beacon frame that carries the AID, so that the UE instructs, according to the AID, the WLAN AP to send the to-be-offloaded data to the UE.

8. A data transmission method, comprising:
receiving, by user equipment UE, a first indication message sent by a base station, wherein the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
adjusting, by the UE, the WLAN module to the non-power saving mode according to the first indication message, and receiving, in the non-power saving mode, to-be-offloaded data sent by the WLAN AP, wherein the non-buffered data comprises the to-be-offloaded data.

9. The method according to claim 8, wherein the receiving, by UE, a first indication message sent by a base station specifically comprises:
receiving, by the UE, a WLAN activation message sent by the base station, wherein the WLAN activation message is used to instruct the UE to enable the WLAN module and adjust the WLAN module to the non-power saving mode.

10. The method according to claim 8, wherein the receiving, by UE, a first indication message sent by a base station specifically comprises:
receiving, by the UE, a power saving mode cancellation indication message sent by the base station, wherein the power saving mode cancellation indication message is used to instruct the UE to adjust the WLAN module to the non-power saving mode.

11. The method according to claim 8, before the receiving, by UE, a first indication message sent by a base station, further comprising:
sending, by the UE, a WLAN power saving mode indication message to the base station, wherein the WLAN power saving mode indication message is used to indicate that the WLAN module is in a power saving mode, and the WLAN power saving mode indication message comprises an association identifier AID allocated to the UE by the WLAN AP.

12. The method according to claim 11, after the sending, by the UE, a WLAN power saving mode indication message to the base station, further comprising:
receiving, by the UE, a beacon Beacon frame sent by the base station, wherein the Beacon frame carries the AID; and
listening, by the UE, for the Beacon frame and acquiring the AID, and determining, according to the AID, to receive the to-be-offloaded data sent by the WLAN AP.

13. The method according to claim 12, wherein the receiving, by UE, a first indication message sent by a base station specifically comprises:
receiving, by the UE, a WLAN activation message sent by the base station, wherein the WLAN activation message is used to instruct the UE to enable the WLAN module and adjust the WLAN module to the non-power saving mode, and the WLAN activation message comprises the Beacon frame that carries the AID; and
acquiring, by the UE, the Beacon frame from the WLAN activation message, acquiring the AID from the Beacon frame, and instructing, according to the AID, the WLAN AP to send the to-be-offloaded data to the UE.

14. Abase station, comprising:
a sending unit, configured to send a first indication message to user equipment UE, wherein the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP, wherein
the sending unit is further configured to send to-be-offloaded data to the WLAN AP, so that the WLAN AP sends the to-be-offloaded data to the UE according to the non-power saving mode of the UE, wherein the non-buffered data comprises the to-be-offloaded data.

15. The base station according to claim 14, wherein
the sending unit is specifically configured to send a WLAN activation message to the UE, wherein the WLAN activation message is used to instruct the UE to enable the WLAN module and adjust the WLAN module to the non-power saving mode; and
the sending unit is further configured to send a second indication message to the WLAN AP, wherein the second indication message is used to indicate that the WLAN module is in the non-power saving mode, so that the WLAN AP sends the to-be-offloaded data to the UE, wherein
the second indication message comprises an identity of the UE.

16. The base station according to claim 14, wherein
the sending unit is specifically configured to send a power saving mode cancellation indication message to the UE, wherein the power saving mode cancellation indication message is used to instruct the UE to adjust the WLAN module to the non-power saving mode; and
the sending unit is further configured to send a second indication message to the WLAN AP, wherein the second indication message is used to indicate that the WLAN module is in the non-power saving mode, so that the WLAN AP sends the to-be-offloaded data to the UE, wherein
the second indication message comprises an identity of the UE.

17. The base station according to any one of claims 14 to 16, wherein the base station further comprises:
a determining unit, configured to determine information about the to-be-offloaded data, wherein the information about the to-be-offloaded data comprises at least one of the following: a data volume of the to-be-offloaded data and a delay requirement of the to-be-offloaded data, wherein
the sending unit is specifically configured to: when the determining unit determines that the data volume of the to-be-offloaded data is greater than or equal to a first threshold and/or the determining unit determines that the delay requirement of the to-be-offloaded data is less than or equal to a second threshold, send the first indication message to the UE.

18. The base station according to claim 14, wherein the base station further comprises:
a receiving unit, configured to receive a WLAN power saving mode indication message sent by the UE, wherein the WLAN power saving mode indication message is used to indicate that the WLAN module is in a power saving mode, and the WLAN power saving mode indication message comprises an association identifier AID allocated to the UE by the WLAN AP.

19. The base station according to claim 18, wherein the receiving unit is further configured to receive a beacon Beacon frame sent by the WLAN AP; and
the sending unit is further configured to add the AID to the Beacon frame and send the Beacon frame to the UE, so that the UE listens for the Beacon frame and determines, according to the AID acquired by means of listening, to receive the to-be-offloaded data.

20. The base station according to claim 19, wherein the sending unit is specifically configured to send a WLAN activation message to the UE, wherein the WLAN activation message is used to instruct the UE to enable the WLAN module and adjust the WLAN module to the non-power saving mode, and the WLAN activation message comprises the Beacon frame that carries the AID, so that the UE instructs, according to the AID, the WLAN AP to send the to-be-offloaded data to the UE.

21. User equipment UE, comprising:
a receiving unit, configured to receive a first indication message sent by a base station, wherein the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
a processing unit, configured to adjust the WLAN module to the non-power saving mode according to the first indication message received by the receiving unit, wherein
the receiving unit is further configured to receive, in the non-power saving mode, to-be-offloaded data sent by the WLAN AP, wherein
the non-buffered data comprises the to-be-offloaded data.

22. The user equipment according to claim 21, wherein the receiving unit is specifically configured to receive a WLAN activation message sent by the base station, wherein the WLAN activation message is used to instruct the UE to enable the WLAN module and adjust the WLAN module to the non-power saving mode.

23. The user equipment according to claim 21, wherein the receiving unit is specifically configured to receive a power saving mode cancellation indication message sent by the base station, wherein the power saving mode cancellation indication message is used to instruct the UE to adjust the WLAN module to the non-power saving mode.

24. The user equipment according to claim 21, wherein the user equipment further comprises:
a sending unit, configured to send a WLAN power saving mode indication message to the base station, wherein the WLAN power saving mode indication message is used to indicate that the WLAN module is in a power saving mode, and the WLAN power saving mode indication message comprises an association identifier AID allocated to the UE by the WLAN AP.

25. The user equipment according to claim 24, wherein the receiving unit is further configured to receive a beacon Beacon frame sent by the base station, wherein the Beacon frame carries the AID; and
the processing unit is further configured to listen for the Beacon frame received by the receiving unit, and acquire the AID; and determine, according to the AID, to receive the to-be-offloaded data sent by the WLAN AP.

26. The user equipment according to claim 25, wherein the receiving unit is specifically configured to receive a WLAN activation message sent by the base station, wherein the WLAN activation message is used to instruct the UE to enable the WLAN module and adjust the WLAN module to the non-power saving mode, and the WLAN activation message comprises the Beacon frame that carries the AID; and
the processing unit is configured to acquire the Beacon frame from the WLAN activation message received by the receiving unit, acquire the AID from the Beacon frame, and instruct, according to the AID, the WLAN AP to send the to-be-offloaded data to the UE.

27. Abase station, comprising:
a transmitter, configured to send a first indication message to user equipment UE, wherein the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP, wherein
the transmitter is further configured to send to-be-offloaded data to the WLAN AP, so that the WLAN AP sends the to-be-offloaded data to the UE according to the non-power saving mode of the UE, wherein the non-buffered data comprises the to-be-offloaded data.

28. The base station according to claim 27, wherein
the transmitter is specifically configured to send a WLAN activation message to the UE, wherein the WLAN activation message is used to instruct the UE to enable the WLAN module and adjust the WLAN module to the non-power saving mode; and
the transmitter is further configured to send a second indication message to the WLAN AP, wherein the second indication message is used to indicate that the WLAN module is in the non-power saving mode, so that the WLAN AP sends the to-be-offloaded data to the UE, wherein
the second indication message comprises an identity of the UE.

29. The base station according to claim 27, wherein
the transmitter is specifically configured to send a power saving mode cancellation indication message to the UE, wherein the power saving mode cancellation indication message is used to instruct the UE to adjust the WLAN module to the non-power saving mode; and
the transmitter is further configured to send a second indication message to the WLAN AP, wherein the second indication message is used to indicate that the WLAN module is in the non-power saving mode, so that the WLAN AP sends the to-be-offloaded data to the UE, wherein
the second indication message comprises an identity of the UE.

30. The base station according to any one of claims 27 to 29, wherein the base station further comprises:
a processor, configured to determine information about the to-be-offloaded data, wherein the information about the to-be-offloaded data comprises at least one of the following: a data volume of the to-be-offloaded data and a delay requirement of the to-be-offloaded data, wherein
the transmitter is specifically configured to: when the processor determines that the data volume of the to-be-offloaded data is greater than or equal to a first threshold and/or the processor determines that the delay requirement of the to-be-offloaded data is less than or equal to a second threshold, send the first indication message to the UE.

31. The base station according to claim 27, wherein the base station further comprises:
a receiver, configured to receive a WLAN power saving mode indication message sent by the UE, wherein the WLAN power saving mode indication message is used to indicate that the WLAN module is in a power saving mode, and the WLAN power saving mode indication message comprises an association identifier AID allocated to the UE by the WLAN AP.

32. The base station according to claim 31, wherein the receiver is further configured to receive a beacon Beacon frame sent by the WLAN AP; and
the transmitter is further configured to add the AID to the Beacon frame and send the Beacon frame to the UE, so that the UE listens for the Beacon frame and determines, according to the AID acquired by means of listening, to receive the to-be-offloaded data.

33. The base station according to claim 32, wherein the transmitter is specifically configured to send a WLAN activation message to the UE, wherein the WLAN activation message is used to instruct the UE to enable the WLAN module and adjust the WLAN module to the non-power saving mode, and the WLAN activation message comprises the Beacon frame that carries the AID, so that the UE instructs, according to the AID, the WLAN AP to send the to-be-offloaded data to the UE.

34. User equipment, comprising:
a receiver, configured to receive a first indication message sent by a base station, wherein the first indication message is used to instruct the UE to adjust a wireless local area network WLAN module in the UE to a non-power saving mode, and the non-power saving mode refers to that the WLAN module is in an awake state, so that a wireless local area network access point WLAN AP sends, to the UE, non-buffered data that is not buffered by the WLAN AP; and
a processor, configured to adjust the WLAN module to the non-power saving mode according to the first indication message received by the receiver, wherein
the receiver is further configured to receive, in the non-power saving mode, to-be-offloaded data sent by the WLAN AP, wherein
the non-buffered data comprises the to-be-offloaded data.

35. The user equipment according to claim 34, wherein the receiver is specifically configured to receive a WLAN activation message sent by the base station, wherein the WLAN activation message is used to instruct the UE to enable the WLAN module and adjust the WLAN module to the non-power saving mode.

36. The user equipment according to claim 34, wherein the receiver is specifically configured to receive a power saving mode cancellation indication message sent by the base station, wherein the power saving mode cancellation indication message is used to instruct the UE to adjust the WLAN module to the non-power saving mode.

37. The user equipment according to claim 34, wherein the user equipment further comprises:
a transmitter, configured to send a WLAN power saving mode indication message to the base station, wherein the WLAN power saving mode indication message is used to indicate that the WLAN module is in a power saving mode, and the WLAN power saving mode indication message comprises an association identifier AID allocated to the UE by the WLAN AP.

38. The user equipment according to claim 37, wherein
the receiver is further configured to receive a beacon Beacon frame sent by the base station, wherein the Beacon frame carries the AID; and
the processor is further configured to listen for the Beacon frame received by the receiver, and acquire the AID; and determine, according to the AID, to receive the to-be-offloaded data sent by the WLAN AP.

39. The user equipment according to claim 38, wherein the receiver is specifically configured to receive a WLAN activation message sent by the base station, wherein the WLAN activation message is used to instruct the UE to enable the WLAN module and adjust the WLAN module to the non-power saving mode, and the WLAN activation message comprises the Beacon frame that carries the AID; and
the processor is configured to acquire the Beacon frame from the WLAN activation message received by the receiver, acquire the AID from the Beacon frame, and instruct, according to the AID, the WLAN AP to send the to-be-offloaded data to the UE.
